# EUROPEAN PATENT SPECIFICATION

(11) **EP 0 532 098 B1**
(45) Date of publication and mention of the grant of the patent: **18.06.1997**
(21) Application number: 92202691.9
(22) Date of filing: 09.09.1992
(51) Int. Cl.: C08F 10/00, C08F 4/68, C08F 4/64

(54) **Catalyst and process for the preparation of an olefin polymer**
Katalysator und Verfahren zur Herstellung eines Olefinpolymeres
Catalyseur et procédé de préparation d'un polymère d'oléfine

(30) Priority: 11.09.1991 NL 9101536
(43) Date of publication of application: 17.03.1993
(73) Proprietor: DSM N.V., 6411 TE Heerlen (NL)
(72) Inventor: Renkema, Jacob, NL-6141 BW Sittard (NL); Konings, Jeroen Hubertina Gerardus, NL-6181 BH Stein (NL); Muskens, Bernardus Johanna, NL-6166 JB Geleen (NL)

(56) References cited:
- EP-A- 0 518 415
- US-A- 3 646 000
- US-A- 5 086 023
- JOURNAL OF THE AMERICAN CHEMICAL SOCIETY, vol. 109, no. 24, 25th November 1987, pages 7408-7416, American Chemical Society; D.D. DEVORE et al.: "Complexes of (arylimido)vanadium(V). Synthetic, structural, spectroscopic, and theoretical studies of V(Ntol)Cl3 and derivatives"
- CHEMICAL ABSTRACTS, vol. 93, 1980, page 6, abstract no. 132896b, Columbus, Ohio, US; F. RADWAN et al.: "Polymerization of ethylene with vanadium(III) amide", & J. PRAKT. CHEM. 1980, 322(3), 465-9

## Description

The invention relates to a catalyst that is suitable for the preparation of an olefin polymer, which catalyst comprises a transition metal component and an organometal component. More specific, the invention is related to a catalyst that is suitable for the preparation of a polymer, based on an α-olefin. Even more specific, the invention relates to a catalyst that is suitable for the preparation of an amorphous copolymer of ethylene, an α-olefine and optionally a diene, which catalyst comprises a vanadium component and an aluminium component.

Such a catalyst is known from several publications. It is used to obtain crystalline as well as amorphous olefin-polymers. It is used to prepare the aforementioned amorphous copolymers, via a so-called Ziegler-Natta polymerisation process and leads to the formation of amorphous ethylene/α-olefine copolymers (also known as EAM rubbers) and amorphous ethylene/α-olefine/diene terpolymers (also known as EADM rubbers). As α-olefine use is then often made of propylene, which leads to the formation of EP or EPDM rubbers. An example of such a catalyst and such a process is found in EP-A-44,119, which mentions that the most suitable catalyst for such a polymerisation consists of a vanadium component and an alkyl aluminium halide.

These known catalysts, however, have several drawbacks. One drawback of such a catalyst, which is often used in the state of the art, is that its activity is poor and use has to be made of large amounts of organometal component.

The applicant has found that a new catalyst, to be described below, leads to a different type of catalytic behaviour and under analogous process conditions, yields a very different polymer, depending on the composition of the catalyst.

The catalyst according to the invention is characterized in that the transition metal component consists of a transition metal atom onto which an imidoaryl ligand is bound. More specific, the catalyst according to the invention is characterized in that the transition metal component consists of a vanadium atom or a titanium atom onto which the imidoaryl ligand is bound, the metal in the organometal component is a metal from group 1,2,12 or 13 of the Periodic Table and the aryl group in the imidoaryl ligand is an o,o-disubstituted phenyl group.
By combining such a transition metal imidoaryl complex and in particular, such a vanadium- or titanium-imidoaryl complex with an organometal component and more specifically with an organo-aluminium component, a unique catalyst is obtained which is useful in Ziegler-Natta polymerization processes.

Vanadium-imidoaryl complexes are known as such; see the publication by D.D. Devore et al. in J. Am. Chem-Soc. vol. 109 (24), p. 7408-16 (1987). However, such complexes have received academic interest only and have not yet been used for technical purposes, let alone for a Ziegler-Natta polymerisation process.

Here and hereinafter a transition metal imidoaryl complex is understood to be the group of compounds with the following general formula:

Ar-N=Me-XₘYₙ (I)

(m+n equals the valency of the Me-imido-group) where:
- Ar: stands for an aryl group, whether or not substituted;
- Me: stands for a transition metal;
- X: stands for a halogen group;
- Y: stands for an alkoxide, aryloxide, an amide or an organometallic group or a different ligand group, which is described below.
(Ar-N= stands for the imidoaryl ligand)

The aryl group consists of a o-o-disubstituted phenyl group. The substituents are then preferably an alkyl group, such as methyl, ethyl, isopropyl, isobutyl.

The transition metal group (that is the Me-group in the general formula) is chosen from groups 3-6 of the Periodic Table of Elements (according to the New IUPAC Notation as given in Handbook of chemistry and Physics, 70th Edt. 1989-90). Preferably the transition metal is chosen from the group Ti, Zr, Hf, V, Nb, Ta and Cr. More preferred is V or Ti as transition metal. For use in the preparation of amorphous copolymers the most preferred transition metal is V.

One or more halogen atoms (the X-group in the general formula) may also be bound to the transition metal atom. These may be chosen from the group comprising F, Cl, Br and I.

Preferably, the transition metal component contains at least 2 halogen groups, more preferably at least 2 chlorine groups, which are bound to the transition metal atom. Mixtures of the aforementioned halogens may also be used.

In addition, the transition metal atom may be provided with a third group (the Y-group in the above general formula): this may be chosen from the group comprising alkoxide, aryloxide, amide or an organometallic group; mixtures may also be used.

See also the aforementioned article in J. Am. Chem. Soc. for suitable vanadium/imidoaryl complexes. This article also indicates how such complexes can be prepared. The reaction of VOCl₃ with para-substituted arylisocyanates can be mentioned as an example here.

The catalyst also comprises an organometal component from groups 1, 2, 12 or 13 of the Periodic Table of Elements (again according to the New IUPAC Notation) as a co-catalyst. At least one hydrocarbon group is bound directly via a C-atom to the metal atom. Suitable compounds of such metals are, for instance, the compounds of sodium, lithium, zinc and magnesium and in particular aluminium. The hydrocarbon group bound to the metal atom in these compounds will preferably contain 1 to 30 carbon atoms, more in particular 1-10 carbon atoms.

Examples of suitable compounds are amyl sodium, butyl lithium, diethyl zinc, butyl magnesium chloride and dibutyl magnesium. Preference is given to organo-aluminium compounds, notably trialkyl aluminium compounds (such as triethyl aluminium), alkyl aluminium hydrides (such a diisobutyl aluminium hydride), alkyl alkoxy aluminium compounds, and halogen-containing aluminium compounds (such as diethyl aluminium chloride, diisobutyl aluminium chloride, monoethyl aluminium dichloride and ethyl aluminium sesquichloride). Mixtures of such compounds may also be used.

The applicant has found that the amount and the type of organometal component chosen are important for obtaining a suitable catalyst. She has found, for example, that use of a vanadium-imidoaryl complex in which at least 2 halogen atoms are bound to the vanadium atom leads to an excellent catalyst if the atomic ratio of the vanadium and the effective aluminium is chosen between 3 : 1 and 1 : 3, preferably between 1 : 1 and 1 : 2. The ratios used in the state of the art on the other hand are between 1 : 5 and 1 : 50 (see also the examples in the aforementioned EP-A-44,119).

Here and hereinafter the term 'effective aluminium' is understood to stand for the amount of aluminium that remains of the amount supplied, after correction for the presence of other Lewis acids or Lewis bases in the catalyst or in the reaction system in polymerisation. The amount of aluminium component that then remains for the effective alkylation of the vanadium component (which, according to current opinions, leads to the formation of the active catalyst) is then related to the amount of vanadium component according to the aforementioned ratio.

In the presence of a Lewis acid (such as BCl₃, GaCl₃, GaBr₃, AlBr₃, AlCl₃, SiCl₄) or a Lewis base (such as water, ester, ether, alcohol, amine, S-compounds such as sulphide or sulphite, P-compounds such as phosphine or phosphite), some of the aluminium component is inactivated, which leads to a corresponding decrease in the amount of aluminium component available for the alkylation of the vanadium component.

It has proved impossible to obtain such a low atomic ratio of the vanadium and the effective aluminium using catalysts known in the art: the catalyst then has no or virtually no catalytic activity for the polymerisation referred to.

Because with a catalyst according to the invention it is, surprisingly, possible to use a low Al/vanadium ratio as described above, a much smaller amount of halogens, in particular chlorides, takes part in the polymerisation process and, what is more important, less halogens end up in the resultant polymer, which has a favourable effect on the corrosive behaviour of the polymer obtained.

The type of aluminium alkyl halide used in the catalyst is also dependent on the nature of the transition metal component. In the case of a catalyst in which the transition metal component is a vanadium component containing at least two halogen atoms that are bound to the vanadium atom, use is preferably made of a trialkyl aluminium, more preferably triethylaluminium (TEA).

The applicant has found that the polymers and especially the amorphous copolymers obtained under standard conditions differ substantially from one another, depending on the type of catalyst chosen and its nature. This phenomenon does not occur in the case of catalysts according to the state of the art; in the case of a catalyst according to the invention there hence appears to be another active catalytic centre that was not previously known.

The catalyst may be added to a polymerisation reactor either in dissolved form (in which case use is preferably made of a solvent that can also be used in the corresponding liquid-phase polymerisation) or in a form in which at least one of the components is bound to a support.

Several methods that are known per se are available for a person skilled in the art. As a support use may be made of for example: silica, alumina, zeolite, MgCl₂, etc. This so-called heterogenising of the catalyst makes it possible to carry out the polymerisation in a slurry or as a gas-phase process.

The catalyst can be modified in different ways to make it more suitable for the preparation of the polymer or copolymer referred to hereinabove.

In the first place the catalyst may also contain a promoter. A promoter is here a compound that improves the polymerisation yield of a catalyst. Halogenated compounds are particularly suitable for this purpose. In order to ensure that a copolymer to be prepared does not contain too much halogen, EP-A-44,119 suggests using specific compounds with a low halogen content as a promoter. These are chiefly and preferably compounds with at most 2 halogen atoms per molecule. The alkyl or alkoxyalkyl esters of phenyl mono- or dihalogen acetic acid may be mentioned as examples of such a compound. For these and other suitable promoters the reader is expressly referred to patent EP-A-44,119, which has already been mentioned several times above.

A second possibility is that the catalyst contains a Lewis acid. Such an acid is also capable of increasing the catalytic activity of the transition metal/organometal combination according to the invention. Examples of suitable Lewis acids are: AlCl₃, AlBr₃, GaCl₃, GaBr₃, BCl₃ or SiCl₄.

Another possibility is that the catalyst contains a Lewis base. Like a Lewis acid, such a compound is also capable of intensifying the catalytic activity. Examples are esters, ethers, ketones, alcohols, amines and the like.

Another possible way of influencing the catalytic activity is the (partial) replacement of the halogen group(s) of the transition metal/imidoaryl complex by another ligand (the Y group in general formula I).
Examples of such ligands are:
- an alkoxy group,
- an aryloxy group,
- an amine group or an amide group,
- an S compound such as sulphide, sulphite, sulphate, thiol, sulphinate,
- a P compound such as phosphine, phosphite, phosphate,
- cyclopentadienyl, substituted or unsubstituted,
- an organometallic compound.
A person skilled in the art, taking note of what is mentioned herein and using simple experimentation can readily determine the suitability of these and other ligands for use in the present invention.

The aforementioned modifications can be applied to the catalyst itself or can be carried out during the polymerisation.

The invention also relates to a process in which a catalyst according of the present invention is used in the preparation of an olefin polymer. More specific, the invention is related to the preparation of a polymer, in which the monomer is selected from the group of α-olefins, internal olefins or di-olefins, and mixtures thereof. In particular, the invention relates to a process for the polymerization of α-olefins, preferably chosen from the group ethylene, propylene, butylene, pentene, heptene, octene and mixtures thereof. More preferred, the α-olefin is ethylene and/or propylene. This results in the formation of crystalline homo- and copolymers of polyethylene (like HDPE, LLDPE) as well as crystalline homo- and copolymers of polypropylene (PP as well as EMPP). All the monomers needed for these types of polymers and the process conditions to prepare these types of polymers are known to the man skilled in the art. Most preferred in the use of the present invention is the use of the process for the preparation of an amorphous copolymer of ethylene, an α-olefine and, optionally, a diene, for example in a liquid-phase copolymerisation. The preparation of said amorphous copolymer is representative of transition metal/organometal catalysts of the invention for producing both crystalline and amorphous olefin-polymers. An amorphous copolymer is here and hereinafter understood to be a copolymer which at room temperature and higher temperatures shows a crystallinity of at most 5%, measured with the aid of DSC (differential scanning calorimetry). Preferably, the copolymer has a crystallinity of at most 1%. Examples of suitable α-olefines that can be used besides ethylene are: propylene, butene-1, pentene-1, hexene-1, octene-1 or the branched isomers thereof, for example 4-methylpentene-1, and also styrene, α-methylstyrene. Mixtures of these alkenes may also be used. Propylene and/or butene-1 are preferred.

As diene to be used in a copolymer use can be made of a polyunsaturated compound which serves to introduce unsaturation into the copolymer; it contains at least two C=C bonds and may be both aliphatic and alicyclic. Aliphatic polyunsaturated compounds usually contain between 3 and 20 carbon atoms; the double bonds may be either conjugated or, preferably, non-conjugated. Examples are: 1,3-butadiene, isoprene, 2,3-dimethylbutadiene-1,3, 2-ethylbutadiene-1,3, piperylene, myrcene, allene, 1,2-butadiene, 1,4,9-decatrienes, 1,4-hexadiene, 1,5-hexadiene and 4-methylhexadiene-1,4. Alicyclic polyunsaturated compounds which may or may not contain a bridge group may be both mono- and polycyclic. Examples of such compounds are norbornadiene and its alkyl derivatives; the alkylidenenorbornenes, in particular the 5-alkylidenenorbornenes-2, in which the alkylidene group contains between 1 and 20, preferably between 1 and 8 carbon atoms; the alkenylnorbornenes, in particular the 5-alkenylnorbornenes-2, of which the alkenyl group contains between 2 and 20 and preferably between 2 and 10 carbon atoms, for example vinylnorbornene, 5-(2'-methyl-2'butenyl)norbornene-2 and 5-(3'methyl-2'butenyl)norbornene-2; dicyclopentadiene and the polyunsaturated compounds of bicyclo-(2,2,1)-heptane, bicyclo-(2,2,2)-octane, bicyclo-(3,2,1)-octane and bicyclo-(3,2,2)-nonane, of which at least one of the rings is unsaturated. In addition, compounds like 4,7,8,9-tetrahydroindene and isopropylidenetetrahydroindene may be used. In particular use is made of dicyclopentadiene, 5-methylene- or 5-ethylidenenorbornene-2, or hexadiene-1,4. Use may also be made of mixtures of the compounds described above.

The diene may be present in the copolymer in amounts of up to 20 wt.%, preferably however up to 10 wt.%.

In addition to or instead of the diene an unsaturated compound with one or more functional groups, for example halogen atoms, OH, OR, COOH, COOR or NH₂ groups, may optionally also be included in the copolymer in an amount of up to 20 wt.%. Such functional monomers generally have an adverse effect on the activity of the polymerisation catalyst. However, when the catalyst of the present invention is used in the presence of a promoter a reasonable polymerisation rate is obtained even when the copolymerisation mixture contains functional monomers.

The molar ratio of the monomers used depends on the desired composition of the copolymer. Because the polymerisation rate of the monomers differs considerably it is not possible to give universally applicable ranges of molar ratios. For example, in the copolymerisation of ethylene and propylene a molar ratio of between 1 : 1 and 1 : 5 will usually be chosen. If a polyunsaturated compound is copolymerised the molar ratio relative to ethylene will usually be between 0.0001 : 1 and 1 : 1.

The copolymerisation reaction is usually carried out at a temperature between -40 and 200°C, preferably between 10 and 80°C. The pressure will usually be 0.1-5 MPa but it is also possible to use higher or lower pressures. Preferably the process is carried out continuously, but it may also be effected semi-continuously or batchwise.

The residence time may vary from a few seconds to several hours. On the whole, a residence time of between a few minutes and an hour will be chosen.

The copolymerisation may take place in a liquid that is inert with respect to the catalyst, for example one or more saturated aliphatic hydrocarbons (such as butane, pentane, hexane, heptane, pentamethylheptane or petroleum fractions); aromatic hydrocarbons (for example benzene or toluene) or halogenated aliphatic or aromatic hydrocarbons (such as tetrachloroethylene). It is possible to use such a temperature and pressure that one or more of the monomers used, in particular the α-olefine, for example propylene, is liquid and is present in such a large amount that it serves as a dispersing agent. No other dispersing agent needs then be used. The process according to the invention may be carried out in a polymerisation reactor filled with gas and liquid or in a reactor filled entirely with liquid. Using a heterogenized catalyst makes it possible to carry out the polymerisation process in a suspension or in the gas phase.

The molar weight can be set with the aid of methods known to a person skilled in the art. In particular, this can be done by using chain length regulators such as diethylzinc and preferably hydrogen. Very small amounts of hydrogen already affect the molecular weight to a sufficient extent.

Surprisingly, it has been found that in the case of liquid-phase processes the catalyst of the present invention is very suitable for use in the preparation of amorphous copolymer of ethylene and an α-olefine at room temperature or even higher temperatures, which means that the reaction heat can be eliminated in a more efficient manner than in the conventional liquid-phase processes. As is known, this can be done by greatly cooling the feed of the reactors or by evaporating a portion of the reaction medium. After the copolymerisation the copolymer can be processed further in different ways. The evaporation of the solvent and coagulation with the aid of steam may both be considered in the case of liquid-phase processes.

The amorphous copolymers obtained according to the process of the invention usually contain between 25 and 85 wt.% ethylene. Products with an ethylene content of between 40 and 75 wt.% are preferred though.
Such copolymers can be used for various purposes, for example for the production of hoses, conveyor belts, sealing profiles. If so desired, they may be vulcanised according to the usual methods, using substances that yield free radicals, for example peroxides, or using sulphur or other vulcanizing agents like phenolic resins.

It is possible to extend the copolymer with oil to make the product processable as a rubber; this is preferably done during the copolymerisation. It is known to add agents to obtain a so-called friable bale. This can be done by adding for example talc or using a system as described in EP-A-427,339. The composition described therein, which comprises an inorganic partitioning agent, a thickener and an inorganic dispersant is very suitable for use in the case with the products of the present invention. Reference may also be given to US-A-4,233,365.

The invention will be described below on the basis of the following examples and comparative experiments, without being limited hereto.

The codes and abbreviations used in the examples and tables have the following meanings:
- Cat 1 =: o,o-diisopropylphenylimido vanadium trichloride
- Cat 2 =: phenylimido vanadium trichloride
- DCPAE =: dichlorophenyl acetic ethyl ester
- TEA =: triethylaluminium
- SEAC =: ethylaluminium sesquichloride
- C₃ cont.=: the weight percentage of the propylene units in the polymer.

### Example I

A 1-litre glass autoclave was filled with 300 ml of petrol and 0.025 mmole of cat 1. The reactor was brought to a pressure of 8 bar with the aid of purified monomers and was conditioned so that the propylene : ethylene ratio in the gas hood was 2 : 1. The temperature of the reactor was 30°C. Then TEA was added to the reactor contents, after which 0.025 mmoles of DCPAE were immediately added. During the polymerisation the concentrations of the monomers were kept as constant as possible by supplying propylene (200 nl/hr) and ethylene (100 nl/hr) to the reactor.
After 30 minutes of polymerisation the reactor was depressurized, the solution was collected and dried. An amorphous copolymer of ethylene and propylene was obtained. Table 1 shows the supplied amounts of TEA and the polymer data.

**TABLE 1**

| Example No. | cat 1 (mmole) | TEA (mmole) | DCPAE (mmole) | Yield (grams) | C₃ cont. (wt.%) |
|---|---|---|---|---|---|
| 1.1 | 0.025 | 0.100 | 0.025 | 7.1 | 28.4 |
| 1.2 | 0.025 | 0.075 | 0.025 | 10.0 | 35.3 |
| 1.3 | 0.025 | 0.050 | 0.025 | 12.5 | 41.0 |
| 1.4 | 0.025 | 0.030 | 0.025 | 12.8 | 45.4 |

These results show that the catalyst becomes more active as less Al alkyl cocatalyst is added. In addition, a different polymer is formed at low Al alkyl concentrations than at high concentrations.

### Example II

Use was made of the same polymerisation setup as in example 1. The various catalyst components were now supplied in a different order. In some cases the V catalyst component was supplied together with a Lewis acid (BCl₃). After conditioning, the promoter DCPAE was supplied first, followed by the cocatalyst (TEA). Table 2 shows the amounts of catalyst components and the results.

**TABLE 2**

| Example No. | cat 1 (mmole) | TEA (mmole) | BCl₃ (mmole) | DCPAE (mmole) | yield (grams) | C₃ cont. (wt.%) |
|---|---|---|---|---|---|---|
| 2.1 | 0.025 | 0.025 | 0.025 | 0 | 0 | |
| 2.2 | 0.025 | 0.030 | 0.025 | 0.025 | 0 | |
| 2.3 | 0.025 | 0.050 | 0.025 | 0.025 | 10.7 | 44.8 |
| 2.4 | 0.025 | 0.025 | 0 | 0.075 | 2.5 | |
| 2.5 | 0.025 | 0.050 | 0 | 0.075 | 9.5 | |
| 2.6 | 0.025 | 0.075 | 0 | 0.075 | 11.2 | 43.3 |

These results show that a Lewis acid (BCl₃) and/or a Lewis base (DCPAE) affect the activity of the Al alkyl (TEA) so that the effective amount of Al alkyl available for the alkylation of the vanadium component decreases. This may be (partly) compensated for by increasing the absolute amount of Al.

### Example III (Not according to the invention)

Example 1 was repeated, with the exception that cat 1 was replaced by cat 2.
See Table 3 for the different amounts of cat components.

Again a clear and amorphous copolymer was obtained. The yield was 6.3 grams; C₃ content = 30.3 %.

These results show that the o,o-disubstituted vanadium component (cat. 1) presents advantages compared with the unsubstituted one (cat. 2).

**TABLE 3**

| Example No. | V cat (mmole) | TEA (mmole) | DCPAE (mmole) | Yield (grams) | C₃ cont. (wt.%) | V cat type |
|---|---|---|---|---|---|---|
| 3.1 | 0.025 | 0.050 | 0.025 | 6.3 | 30.3 | (2) |
| 1.3 | 0.025 | 0.050 | 0.025 | 12.5 | 41.0 | (1) |

### Example IV

Example 2 was repeated, with the exception that different V compounds were used. In addition, TEA was replaced by SEAC.

Table 4 shows the amounts of catalyst components and the results. Examples 4.3 and 4.4 are not according to the invention.

**TABLE 4**

| Example No. | V comp. | mmole | SEAC (mmole) | DCPAE (mmole) | yield (grams) | C₃ cont. (wt.%) |
|---|---|---|---|---|---|---|
| 4.1 | cat. 1 | 0.025 | 0.1 | 0.025 | 3.3 | 35 |
| 4.2 | cat. 1 | 0.006 | 1.0 | 0.025 | 8.4 | 40 |
| 4.3 | VOCl₃ | 0.006 | 0.1 | 0.025 | 9.3 | 40 |
| 4.4 | VOCl₃ | 0.006 | 1.0 | 0.025 | 10.5 | 40 |

These results show that a vanadium/imidoaryl complex with high aluminium alkyl halide concentrations leads to the formation of a polymer that has the same properties as the polymer obtained with the standard catalyst system, in which case use is made of VOCl₃ as the vanadium component. In this case the activities are also comparable. Indirectly it also appears that the active centre that is formed in the reaction between a vanadium/imidoaryl complex and the aluminium alkyl halide differs, depending of the type of aluminium halide used: different polymers are formed when TEA is replaced by SEAC.

## Claims

1. Catalyst, suitable for the preparation of an olefin polymer, which catalyst comprises a transition metal component and an organometal component, characterized in that the transition metal component consists of a transition metal atom onto which an imidoaryl ligand is bound, the metal in the organometal component is a metal from group 1, 2, 12 or 13 of the Periodic Table and the arylgroup in the imidoaryl ligand is an O,O-disubstituted phenylgroup.

2. Catalyst according to claim 1, characterized in that the transition metal is chosen from the group Ti or V.

3. Catalyst according to anyone of claims 1-2, characterized in that the organometal compound is an organoaluminium compound.

4. Catalyst, suitable for the preparation of an amorphous copolymer of ethylene, an α-olefine and optionally a diene, which catalyst comprises a vanadium component and an aluminium component, characterized in that the vanadium component consists of a vanadium atom onto which an imidoaryl ligand is bound and wherein the arylgroup in the imidoaryl ligand is an O,O-disubstitued phenylgroup.

5. Catalyst according to claim 4, characterized in that the vanadium component contains at least two halogen groups that are bound to the vanadium atom.

6. Catalyst according to claim 5, characterized in that the atomic ratio of the vanadium and the effective aluminium is between 3 : 1 and 1 : 3.

7. Catalyst according to anyone of claims 4-6, characterized in that the aluminium component is trialkylaluminium.

8. Catalyst according to claim 6, characterized in that the atomic ratio of the vanadium and the effective aluminium is between 1 : 1 and 1 : 2.

9. Catalyst according to claim 1 or 4, characterized in that a promoter is also present.

10. Catalyst according to claim 9, characterized in that the promoter contains at the most two halogen atoms per molecule.

11. Catalyst according to claim 1 or 4, characterized in that a Lewis acid or a Lewis base is also present.

12. Catalyst according to claim 1 or 4, characterized in that one or more components are bound to a support.

13. Process for the preparation of an olefin polymer with the aid of a catalyst, characterized in that a catalyst is used according to anyone of claims 1-12.

14. Process according to claim 13, characterized in that the olefin is selected from the group α-olefin, internal olefin, diolefin and mixtures thereof.

15. Process according to claim 14, characterized in that the α-olefin is chosen from the group ethylene, propylene, butene, pentene, heptene, octene and mixtures thereof.

16. Process according to claim 15, characterized in that a polymer is prepared based on ethylene and/or propylene as monomers.

17. Process for the preparation of an amorphous copolymer through copolymerisation of ethylene, an α-olefine and optionally a diene with the aid of a catalyst, characterized in that a catalyst is used according to any one of claims 1-12.

## Patentansprüche

1. Katalysator, welcher zur Herstellung eines Olefin-Polymers geeignet ist, welcher Katalysator eine Übergangsmetall-Komponente und eine Organometall-Komponente umfaßt, dadurch gekennzeichnet, daß die Übergangsmetall-Komponente aus einem Übergangsmetallatom besteht, an welches ein Imidoaryl-Ligand gebunden ist, das Metall in der Organometall-Komponente ein Metall der Gruppe 1, 2, 12 oder 13 des Periodensystems ist, und die Aryl-Gruppe im Imidoaryl-Liganden eine o,o-disubstituierte Phenyl-Gruppe ist.

2. Katalysator nach Anspruch 1, dadurch gekennzeichnet, daß das Übergangsmetall aus der Gruppe Ti oder V ausgewählt ist.

3. Katalysator nach einem der Ansprüche 1 bis 2, dadurch gekennzeichnet, daß die Organometall-Komponente eine Organoaluminium-Verbindung ist.

4. Katalysator, welcher zur Herstellung eines amorphen Copolymers von Ethylen, einem α-Olefin und gegebenenfalls einem Dien geeignet ist, welcher Katalysator eine Vanadium-Komponente und eine Aluminium-Komponente umfaßt, dadurch gekennzeichnet, daß die Vanadium-Komponente aus einem Vanadiumatom besteht, an welches ein Imidoaryl-Ligand gebunden ist, und wobei die Aryl-Gruppe im Imidoaryl-Liganden eine o,o-disubstituierte Phenyl-Gruppe ist.

5. Katalysator nach Anspruch 4, dadurch gekennzeichnet, daß die Vanadium-Komponente zumindest zwei Halogen-Gruppen enthält, die an das Vanadiumatom gebunden sind.

6. Katalysator nach Anspruch 5, dadurch gekennzeichnet, daß das Atomverhältnis von Vanadium und effektivem Aluminium zwischen 3:1 und 1:3 beträgt.

7. Katalysator nach einem der Ansprüche 4 bis 6, dadurch gekennzeichnet, daß die Aluminium-Komponente Trialkylaluminium ist.

8. Katalysator nach Anspruch 6, dadurch gekennzeichnet, daß das Atomverhältnis von Vanadium und effektivem Aluminium zwischen 1:1 und 1:2 beträgt.

9. Katalysator nach Anspruch 1 oder 4, dadurch gekennzeichnet, daß auch ein Promotor vorliegt.

10. Katalysator nach Anspruch 9, dadurch gekennzeichnet, daß der Promotor höchstens zwei Halogenatome pro Molekül enthält.

11. Katalysator nach Anspruch 1 oder 4, dadurch gekennzeichnet, daß auch eine Lewis-Säure oder eine Lewis-Base vorliegt.

12. Katalysator nach Anspruch 1 oder 4, dadurch gekennzeichnet, daß eine oder mehrere Komponenten an einen Träger gebunden sind.

13. Verfahren zur Herstellung eines Olefin-Polymers mit Hilfe eines Katalysators, dadurch gekennzeichnet, daß ein Katalysator nach einem der Ansprüche 1 bis 12 verwendet wird.

14. Verfahren nach Anspruch 13, dadurch gekennzeichnet, daß das Olefin aus der Gruppe α-Olefin, innenständigem Olefin, Diolefin und Mischungen hievon ausgewählt wird.

15. Verfahren nach Anspruch 14, dadurch gekennzeichnet, daß das α-Olefin aus der Gruppe Ethylen, Propylen, Buten, Penten, Hepten, Octen und Mischungen hievon ausgewählt wird.

16. Verfahren nach Anspruch 15, dadurch gekennzeichnet, daß ein Polymer auf der Basis von Ethylen und/oder Propylen als Monomere hergestellt wird.

17. Verfahren zur Herstellung eines amorphen Copolymers durch Copolymerisation von Ethylen, einem α-Olefin und gegebenenfalls einem Dien mit Hilfe eines Katalysators, dadurch gekennzeichnet, daß ein Katalysator nach einem der Ansprüche 1 bis 12 verwendet wird.

## Revendications

1. Catalyseur approprié pour la préparation d'un polymère d'oléfine, ce catalyseur comportant un composant de métal de transition et un composant organométallique, caractérisé en ce que le composant de métal de transition est constitué d'un atome de métal de transition sur lequel un ligand imidoaryle est lié, que le métal dans le composant organo-métallique est un métal du groupe 1,2, 12 ou 13 du Tableau Périodique et que le groupe aryle du ligand imidoaryle est un groupe phényle o,o-disubstitué.

2. Catalyseur selon la revendication 1, caractérisé en ce que le métal de transition est choisi dans le groupe Ti ou V.

3. Catalyseur selon l'une quelconque des revendications 1 à 2, caractérisé en ce que le composé organométallique est un composé organoaluminium.

4. Catalyseur approprié pour la préparation d'un copolymère amorphe d'éthylène, d'une α-oléfine et, facultativement, d'un diène, ce catalyseur comportant un composant du vanadium et un composant d'aluminium, caractérisé en ce que le composant du vanadium est constitué d'un atome de vanadium selon lequel un ligand imidoaryle est lié et que le groupe aryle dans le ligand imidoaryle est un groupe phényle o,o-disubstitué.

5. Catalyseur selon la revendication 4, caractérisé en ce que le composant du vanadium renferme au moins deux atomes d'halogène qui sont liés à l'atome de vanadium.

6. Catalyseur selon la revendication 5, caractérisé en ce que le rapport atomique du vanadium à l'aluminium efficace se situe entre 3:1 et 1:3.

7. Catalyseur selon l'une quelconque des revendications 4 à 6, caractérisé en ce que le composant d'aluminium est un trialkylaluminium.

8. Catalyseur selon la revendication 6, caractérisé en ce que le rapport atomique du vanadium à l'aluminium efficace se situe entre 1:1 et 1:2.

9. Catalyseur selon la revendication 1 ou 4, caractérisé en ce qu'un promoteur est également présent.

10. Catalyseur selon la revendication 9, caractérisé en ce que le promoteur renferme au maximum deux atomes d'halogène par molécule.

11. Catalyseur selon la revendication 1 ou 4, caractérisé en ce qu'un acide de Lewis ou une base de Lewis est également présent.

12. Catalyseur selon la revendication 1 ou 4, caractérisé en ce qu'un ou plus d'un composant sont liés à un support.

13. Procédé pour la préparation d'un polymère oléfinique à l'aide d'un catalyseur, caractérisé en ce que l'on utilise un catalyseur selon l'une quelconque des revendications 1 à 12.

14. Procédé selon la revendication 13, caractérisé en ce que l'oléfine est choisie dans le groupe des α-oléfines, des oléfines internes, des dioléfines et des mélanges de celles-ci.

15. Procédé selon la revendication 14, caractérisé en ce que l'α-oléfine est choisie dans le groupe de l'éthylène, du propylène, du butène, du pentène, de l'heptène, de l'octène et des mélanges de ceux-ci.

16. Procédé selon la revendication 15, caractérisé en ce qu'un polymère est préparé en se basant sur l'éthylène et/ou le propylène en tant que monomères.

17. Procédé pour la préparation d'un copolymère amorphe par la copolymérisation de l'éthylène, d'une α-oléfine et facultativement d'un diène à l'aide d'un catalyseur, caractérisé en ce qu'on utilise un catalyseur selon l'une quelconque des revendications 1 à 12.
